## Europäisches Patentamt

## European Patent Office

## Office européen des brevets

(11) Veröffentlichungsnummer: **0 079 427**
**B1**

(12) **EUROPÄISCHE PATENTSCHRIFT**

(45) Veröffentlichungstag der Patentschrift:
**17.04.85**

(21) Anmeldenummer: **82107089.3**

(22) Anmeldetag: **05.08.82**

(30) Priorität: **13.11.81 DE 3145198**

(43) Veröffentlichungstag der Anmeldung:
**25.05.83 Patentblatt 83/21**

(45) Bekanntmachung des Hinweises auf die Patenterteilung:
**17.04.85 Patentblatt 85/16**

(84) Benannte Vertragsstaaten:
**AT CH DE FR GB LI SE**

(56) Entgegenhaltungen:
**DE - A - 2 258 951**
**DE - A - 3 001 415**
**GB - A - 725 548**

(51) Int. Cl.⁴: **B 60 T 8/18**

(73) Patentinhaber: **Knorr-Bremse GmbH, Moosacher Strasse 80, D-8000 München 40 (DE)**

(72) Erfinder: **Gmelch, Xaver, Dreimühlenstrasse 10, D-8000 München 5 (DE)**
Erfinder: **Wosegien, Bernd, Ringseisstrasse 8, D-8000 München 2 (DE)**

(54) **Wiegeventil für Fahrzeuge.**

## Beschreibung

Die Erfindung bezieht sich auf ein Wiegeventil für Fahrzeuge, welches bei Erreichen einer vorbestimmten Fahrzeuglast einen Signaldruck in einer Steuerleitung schaltet, mit einem von der Fahrzeuglast belasteten, hydraulisch wirkenden Kraftuntersetzungsgetriebe mit gegebenenfalls elastisch oder plastisch verformbaren Kraftübertragungsmedium, dessen Ausgangsstößel von einer sich justierbar gegen ein festes Widerlager abstützenden, zum Ausgangsstößel gleichachsigen Feder entgegen der untersetzten Fahrzeuglast belastet ist und hubabhängig ein Schaltventil für die Druckführung in der Steuerleitung betätigt, mit einem im wesentlichen quer zur Längsrichtung des Ausgangsstößels angeordneten Hebel.

Ein derartiges, zweistufig schaltendes Wiegeventil ist der DE-A-2 258 951 entnehmbar. Das dem Kraftuntersetzungsgetriebe abgewandte Ende der Feder stützt sich dabei über einen Federteller und eine Justierschraube einstellbar gegen das Wiegeventilgehäuse ab, das Schaltventil muß daher seitlich der Feder mittels des vom Ausgangsstößel auskragenden Hebels betätigbar angeordnet werden. Die seitlich versetzte Anordnung des Schaltventils erfordert hinsichtlich der Führungen und Toleranzen eine aufwendige und komplizierte Konstruktion.

Mit der DE-OS 3 001 415 ist ein Wiegeventil mit einachsiger Anordnung von Kraftübertragungsmedium, Ausgangsstößel, Schaltventil und Feder bekannt geworden, doch fehlt hierbei eine Justiermöglichkeit für die Feder, wodurch dieses Wiegeventil von den eingangs genannten Merkmalen abweicht.

Es ist Aufgabe der Erfindung, ein Wiegeventil der eingangs genannten Art derart auszubilden, daß sich ein einfacher Aufbau und eine gute Justiermöglichkeit für die Feder und die Möglichkeit für eine wirtschaftliche und billige Fertigung ergibt.

Diese Aufgabe wird nach der Erfindung dadurch gelöst, daß das Widerlager und eine Justiereinrichtung seitlich versetzt zum Ausgangsstößel im Wiegeventilgehäuse angeordnet sind und mit dem als Übersetzungshebel ausgebildeten, widerlagerseitig die Feder abstützenden Hebel gekoppelt sind, und daß das Schaltventil, wie an sich bekannt, gleichachsig zum Ausgangsstößel angeordnet ist. Hierdurch wird bei einachsiger Anordnung von Kraftuntersetzungsgetriebe, Ausgangsstößel, Feder und Schaltventil und hierdurch ermöglichter einfacher und hinsichtlich Toleranzen unkritischer Fertigung eine gute Einstellbarkeit der Feder und damit Justierbarkeit des Schaltpunktes des Wiegeventils, bezogen auf die Fahrzeuglast, erreicht.

Die Unteransprüche zeigen vorteilhafte Ausgestaltungsmöglichkeiten des nach der Erfindung ausgebildeten Wiegeventils auf.

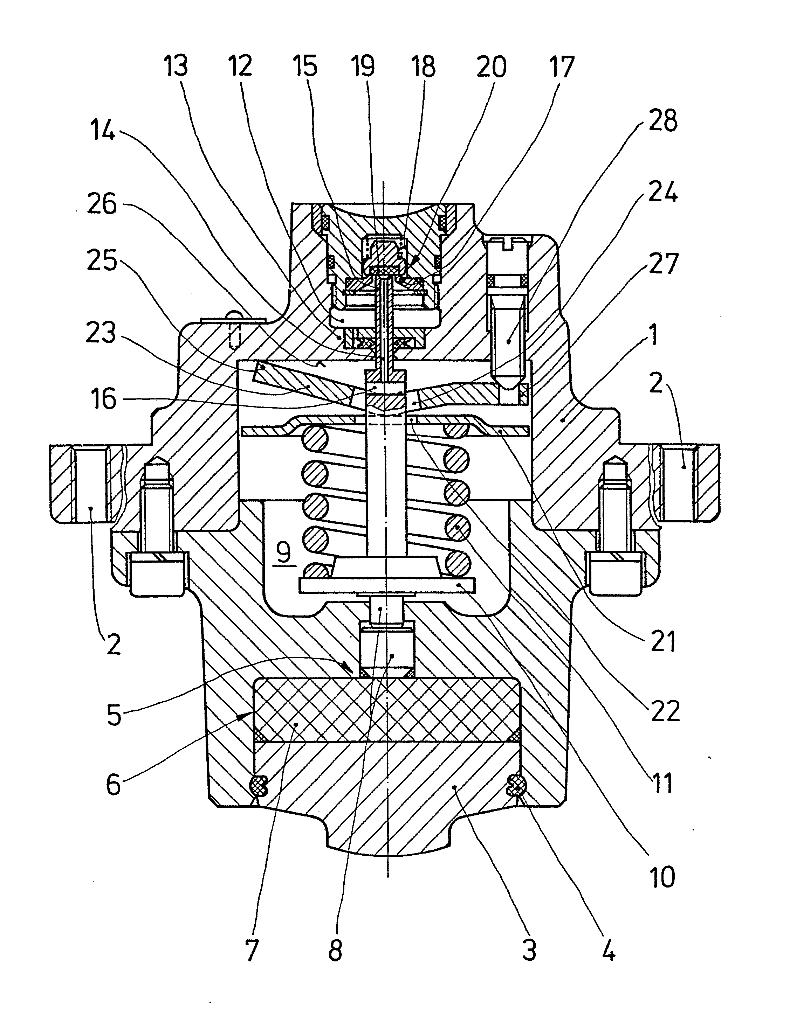

In der Zeichnung ist ein Wiegeventil im Längsschnitt dargestellt.

Das wie üblich in Serie zu einer in der Zeichnung nicht dargestellten Achs- bzw. Radfederung eines Fahrzeuges, insbesondere eines Schienenfahrzeuges anzuordnende Wiegeventil weist ein Wiegeventilgehäuse 1 auf, das mittels Gewindebohrungen 2 am nicht dargestellten Fahrzeugrahmen zu befestigen ist. Nahe seines unteren Endes ist im Wiegeventilgehäuse 1 ein Druckteller 3 vertikal verschieblich gelagert. Ein Ringkörper 4 aus elastischem Werkstoff greift in einander gegenüberstehende Ringnuten im Druckteller 3 und im Wiegeventilgehäuse 1 ein, ermöglicht eine begrenzte Axialverschiebung des Drucktellers 3, hindert diesen jedoch am Austreten aus dem Wiegeventilgehäuse 1 und dichtet zugleich den Ringspalt zwischen dem Außenumfang des Drucktellers 3 und dem Wiegeventilgehäuse 1 ab, so daß keine Fremdkörper oder Feuchtigkeit in das Innere des Wiegeventilgehäuses 1 eindringen können. Zur Bildung eines Kraftuntersetzungsgetriebes 5 liegt auf dem Druckteller 3 als Kraftübertragungsmedium 6 eine Gummiplatte 7 auf, welche einen oben und seitlich von den Wandungen des Wiegeventilgehäuses und unten durch die Oberfläche des Drucktellers 3 umschlossenen Raum völlig ausfüllt. Auf der Gummiplatte 7 steht zentrisch ein im Ventilgehäuse 1 axial verschieblich geführter Ausgangsstößel 8 auf, der einen im Vergleich zum Druckteller 3 und zur Gummiplatte 7 kleinen Durchmesser besitzt. Der Ausgangsstößel 8 durchragt einen Raum 9, in welchem er einen Federteller 10 trägt, auf welchem das untere Ende einer Feder 11 aufruht. Nahe seines oberen Endes durchragt der Ausgangsstößel abgedichtet verschieblich eine den Raum 9 von einem weiteren Raum 12 abtrennende Wandung 13 des Wiegeventilgehäuses 1 und endet im Raum 12 mit einem eine Axialbohrung 14 umgebenden Ventilsitz 15. Über eine Querbohrung 16 steht die Axialbohrung 14 in ständiger Verbindung mit dem über eine nicht gezeigte Entlüftung an die Atmosphäre angeschlossenen Raum 9. An den Raum 12 ist eine nicht dargestellte, einen Signaldruck führende Steuerleitung angeschlossen. Dem Ventilsitz 15 und einem diesen mit Abstand umgebenden, gehäusefesten weiteren Ventilsitz 17 steht eine federbelastete, in einem Raum 18 angeordnete Doppelventildichtung 19 gegenüber. Der Raum 18 ist an eine nicht dargestellte, ständig Druckmittel führende Versorgungsleitung angeschlossen. Die beiden Ventilsitze 15 und 17 sowie die Doppelventildichtung 19 bilden zusammen ein Schaltventil 20.

Auf dem oberen Ende der Feder 11 liegt ein Federteller 21 auf, der mit Spiel an der Seitenwandung des Raumes 9 geführt ist und den in einer weiten Bohrung 22 der Ausgangsstößel 8 mit Spiel durchsetzt. Auf dem Federteller 21 liegt seitlich des Ausgangsstößels 8 der mittlere Abschnitt eines leicht abgewinkelt ausgebildeten, sich im wesentlichen quer zum Ausgangsstößel 8 erstreckenden Hebels 23 auf; der Ausgangsstößel 8 durchsetzt den Hebel 23 in einer weiten Bohrung 24 mit allseitigem Spiel. Das eine, schräg nach oben ragende Ende 25 des Hebels 23 liegt an einer der Wandung 13 zugehörenden Fläche 26 des Wiegeventilgehäuses 1 an und das andere Ende 27 des Hebels 23 stützt sich gegen eine verstellbar mit dem Wiegeventilgehäuse 1 verschraubte Justierschraube 28 ab. Der Hebel 23 stellt also einen Übersetzungshebel dar, der einerseits in seinem mittleren Bereich über den Federteller 21 an der Feder 11 und andererseits an seinen Enden an der als Widerlager dienenden Fläche 26 bzw. der Justierschraube 28 anliegt.

Die nicht dargestellte Achs- bzw. Radfederung des Fahrzeuges ist mit der Unterseite des Drucktellers 3 gekoppelt und übt auf diesen eine nach oben gerichtete, der Fahrzeuglast entsprechende Kraft aus.

Bei eine bestimmte Grenzlast unterschreitender Fahrzeugbelastung vermag die Feder 11 über den Federteller 10 den Ausgangsstößel 8 nach unten derart gegen die Gummiplatte 7 zu drükken, daß der Ventilsitz 15 von der Doppelventildichtung 19 nach unten abgesenkt ist, die Doppelventildichtung 19 also allein auf dem Ventilsitz 17 aufliegt. Der Raum 12 und damit die Steuerleitung sind somit über die Axialbohrung 14, die Querbohrung 16 und den Raum 9 zur Atmosphäre entlüftet und drucklos.

Übersteigt die Fahrzeuglast die bestimmte Grenzlast, so übt der Druckteller 3 auf die Gummiplatte 7 eine derartige Pressung aus, daß die Gummiplatte 7 den Ausgangsstößel 8 entgegen der Kraft der Feder 11 anhebt, wobei sich der Ventilsitz 15 von unten an die Doppelventildichtung 18 anlegt und letztere vom Ventilsitz 17 nach oben abhebt. Damit ist die Entlüftung des Raumes 12 unterbrochen und der Raum 12 wird aus dem Raum 18 mit Druckmittel beaufschlagt; die mit dem Raum 12 verbundene Steuerleitung führt also nunmehr Druckmittel und die Druckführung der Steuerleitung zeigt an, daß die bestimmte Grenzlast des Fahrzeuges überschritten ist.

Beim Unterschreiten der bestimmten Grenzlast spielen sich entsprechend umgekehrte Vorgänge ab.

Durch Verschrauben der Justierschraube 28 im Wiegeventilgehäuse 1 kann der Hebel 23 um seine Auflage an der Fläche 26 geschwenkt werden, wobei der Federteller 21 mehr oder weniger nach unten gedrückt und die Feder 11 somit mehr oder weniger vorgespannt wird. Da die Fahrzeug-Grenzlast, bei welcher das Schaltventil 20 umschaltet, von der Vorspannung der Feder 11 abhängt, kann somit durch Verschrauben der Justierschraube 28 diese Fahrzeug-Grenzlast und damit der Schaltpunkt des Wiegeventils variiert und justiert werden.

Die gleichachsige Anordnung von Druckteller 3, Gummiplatte 7, Ausgangsstößel 8, Feder 11 und Schaltventil 20 ermöglichen eine einfache und hinsichtlich der Toleranzen unkritische Fertigung des Wiegeventils. Die Justierschraube 28 in Verbindung mit dem Hebel 23 gewährleistet eine gute Einstellbarkeit des Schaltpunktes des Wiegeventils.

Anstelle der Gummiplatte 7 kann als Kraftübertragungsmedium 6 auch eine hydraulische Druckmeßdose oder ein im wesentlichen plastisch verformbares Material vorgesehen sein; derartige Kraftübertragungsmedien sind für Wiegeventile bekannt.

## Patentansprüche

1. Wiegeventil für Fahrzeuge, welches bei Erreichen einer vorbestimmten Fahrzeuglast einen Signaldruck in einer Steuerleitung schaltet, mit einem von der Fahrzeuglast belasteten, hydraulisch wirkenden Kraftuntersetzungsgetriebe (5) mit gegebenenfalls elastisch oder plastisch verformbaren Kraftübertragungsmedium (Gummiplatte 7), dessen Ausgangsstößel (8) von einer sich justierbar gegen ein festes Widerlager (Fläche 26) abstützenden, zum Ausgangsstößel (8) gleichachsigen Feder (11) entgegen der untersetzten Fahrzeuglast belastet ist und hubabhängig ein Schaltventil (20) für die Druckführung in der Steuerleitung betätigt, mit einem im wesentlichen quer zur Längsrichtung des Ausgangsstößels (8) angeordneten Hebel (23), dadurch gekennzeichnet, daß das Widerlager (Fläche 26) und eine Justiereinrichtung (Justierschraube 28) seitlich versetzt zum Ausgangsstößel (8) im Wiegeventilgehäuse (1) angeordnet sind und mit dem als Übersetzungshebel ausgebildeten, widerlagerseitig die Feder (11) abstützenden Hebel (23) gekoppelt sind, und daß das Schaltventil (20), wie an sich bekannt, gleichachsig zum Ausgangsstößel (8) angeordnet ist.

2. Wiegeventil nach Anspruch 1, dadurch gekennzeichnet, daß der Hebel (23) den Ausgangsstößel (8) berührungsfrei kreuzend angeordnet ist und jeweils mittel- oder unmittelbar in seinem mittleren Bereich mit der Feder (11) und in seinen Endbereichen (25, 27) mit dem Widerlager (Fläche 26) und der Justiereinrichtung (Justierschraube 28) gekoppelt ist.

3. Wiegeventil nach Anspruch 2, dadurch gekennzeichnet, daß der Hebel (23) einerseits an seinem einen Ende (25) an einer das Widerlager bildenden Fläche (26) des Wiegeventilgehäuses (1) und an seinem anderen Ende (27) an einer Justierschraube (28) und andererseits in seinem mittleren Bereich an der Feder (11) anliegt.

4. Wiegeventil nach Anspruch 3, dadurch gekennzeichnet, daß sich zwischen der Feder (11) und dem Hebel (23) ein im Wiegeventilgehäuse (1) verschieblich geführter Federteller befindet.

## Claims

1. Cradle valve for vehicles, which, when a previously determined vehicle load is reached, switches on a signal pressure in a control line, with a hydraulically operating power reducing gear (5) which is loaded with the vehicle load, with, if necessary, an elastically or plastically workable transmission medium (rubber plate 7), the starting tappet (8) of which is loaded, against the vehicle load which is placed underneath, with a spring (11), lying in the same axis as the starting tappet (8) and adjustably supporting itself against a firm buttress (surface 26), and operates, dependent on the stroke, an on-off valve (20) for the pressure guidance in the control line, with a lever (23) which is essentially arranged transversely to the longitudinal direction of the starting tappet (8), characterised in that the buttress (surface 26) and an adjusting device (adjusting screw 28), sideways displaced to the starting tappet (8), are arranged in the cradle valve housing (1) and are coupled with the lever (23) which is supporting the spring on the buttress side and is developped as a transmission lever, and in that the on-off valve (20), as is known per se, is arranged in the same axis as the starting tappet (8).

2. Cradle valve according to claim 1, characterised in that the lever (23) is arranged accross the starting tappet (8) in a contact-free manner and is directly or indirectly coupled with the spring (11) in its middle region and with the buttress (surface 26) and the adjusting device (adjusting screw 28) in its end regions (25, 27), respectively.

3. Cradle valve according to claim 2, characterised in that the lever (23) adjoins on the one hand, at its one end (25) a surface (26) of the cradle valve housing (1) which forms the buttress and at its other end (27) an adjusting screw (28) and on the other hand, in its middle region, the spring (11).

4. Cradle valve according to claim 3, characterised in that a relocatable guidable spring plate (21) is disposed between the spring (11) and the lever (23) in the cradle valve housing (1).

## Revendications

1. Soupape de pesée pour véhicules, qui règle, lorsqu'une charge de véhicule prédéterminée est atteinte, une pression de signal dans une conduite de commande, avec une transmission à démultiplication de force (5), soumise à la charge du véhicule, agissant par voie pneumatique et pourvue éventuellement d'un milieu de transmission de force (7), élastique ou déformable plastiquement (plaque de caoutchouc), dont le poussoir de sortie (8) est chargé, à l'encontre de la charge de véhicule démultipliée, par un ressort (11) de même axe que le poussoir de sortie (8), réglable et portant sur un contre-appui (surface 26), et commande, en fonction de la course, une soupape de commande (20) pour contrôler la pression dans la conduite de commande, avec un levier (23) disposé sensiblement en direction transversale par rapport à la direction longitudinale du poussoir de sortie (8), caractérisé par le fait que le contre-appui (surface 26) et un dispositif de réglage (vis de réglage 28) sont disposés, dans le boîtier (1) de la soupape de pesée, avec décalage latéral par rapport au poussoir de sortie (8) et sont accouplés au levier (23) qui est réalisé sous la forme d'un levier multiplicateur et qui soutient le ressort (11) du côté du contre-appui, et que la soupape de commande (20) est, de façon connue, disposée coaxialement avec le poussoir de sortie (8).

2. Soupape de pesée selon la revendication 1, caractérisée par le fait que le levier (23) est disposé de manière à croiser, sans contact, le poussoir de sortie (8), et il est accouplé, respectivement, indirectement ou directement, par sa partie médiane, au ressort (11) et par ses parties d'extrémité (25, 27), au contre-appui (surface 26) et au dispositif de réglage (28).

3. Soupape de pesée selon la revendicatio 2, charactérisée par le fait que le levier porte, d'une part, par l'une de ses extrémités (25) contre une surface (26) du boîtier (11) de la soupape de pesée, qui constitue le contre-appui, et, par son autre extrémité (27), contre la vis de réglage (28), et, d'autre part, par sa partie médiane, contre le ressort (11).

4. Soupape de pesée selon la revendication 3, caractérisé par le fait qu'entre le ressort (11) et le levier (23) est située une coupelle de ressort (21) guidée en déplacement dans le boîtier (1) de la soupape de pesée.